# EUROPEAN PATENT SPECIFICATION

(11) **EP 3 481 026 B1**
(45) Date of publication and mention of the grant of the patent: **23.12.2020**
(21) Application number: 17200288.3
(22) Date of filing: 07.11.2017
(51) Int. Cl.: H04L 29/06, H04J 3/06

(54) **PROTECTING NETWORK ELEMENTS OR INSTANTIATIONS OF NETWORK ELEMENTS AGAINST FUNCTIONALITY PROBING ATTACKS**
SCHUTZ VON NETZWERKELEMENTEN ODER INSTANZIIERUNGEN VON NETZWERKELEMENTEN GEGEN FUNKTIONALITÄTSSONDIERUNGSANGRIFFE
PROTECTION D'ÉLÉMENTS DE RÉSEAU OU D'INSTANTIATIONS D'ÉLÉMENTS DE RÉSEAU CONTRE DES ATTAQUES DE SONDAGE DE FONCTIONNALITÉ

(43) Date of publication of application: 08.05.2019
(73) Proprietor: Nokia Technologies Oy, 02610 Espoo (FI)
(72) Inventor: Kalliola, Aapo, 00710 Helsinki (FI); Holtmanns, Silke, 01800 Klaukkala (FI)
(74) Representative: Espatent Oy

(56) References cited:
- WO-A2-2016/184981
- US-A1- 2004 205 372
- US-A1- 2015 242 059
- US-A1- 2017 093 918
- US-B1- 8 064 485

## Description

### TECHNICAL FIELD

The present application generally relates to protecting network elements or instantiations of network elements against functionality probing attacks.

### BACKGROUND

This section illustrates useful background information without admission of any technique described herein representative of the state of the art.

US8064485 (B1) discloses transparent clocks that manipulate precision time protocol packets sent by a grandmaster clock.

WO2016184981 (A2) discloses providing secure timing synchronization to network nodes connected over an inherently insecure best effort public network with mechanisms to improve accuracy of timing protocols.

Security devices such as firewalls inflict a small delay to packets which are processed through the security device. While this delay is normally in the order of microseconds, it is measurable. Furthermore, the delay is not fixed for a given device, but rather a distribution of delays, and these distributions are typically distinct between different devices. Thus, if an attacker can measure the delays inflicted by the security device, he can potentially deduce the make and model of the device. This kind of approach is sometimes also called fingerprinting of devices.

The security devices are not directly accessible to the attackers for measurement purposes. However, the attackers might utilize existing time synchronization services (i.e. IEEE1588, potentially NTP) within the target environment for delay measurements. In IEEE1588 any asymmetric packet path delay in one direction (incoming in case of incoming traffic inspection devices) of traffic will result in time synchronization results being offset by half the delay amount. The time servers are often synchronized with external reference time which is also accessible to the attacker. Therefore, the attacker could observe the result offset in order to infer the on-path delay asymmetry and thus determine the processing delay incurred by the security devices.

In practice, also other packet data infrastructure causes occasional delays to all traffic including any malicious probing packets. A small fraction of the packets will nonetheless pass through the whole network without forwarding delays or processing scheduling events. Such packets could be identified by that how fast they traverse the infrastructure. Thus, it could be considered that the rest of the forwarding infrastructure merely adds some noise to a probing attack without preventing it.

It is desirable to protect network elements or their instantiations from functionality probing attacks which utilize the time synchronization protocols.

### SUMMARY

The scope of protection sought for various embodiments of the invention is set out by the independent claims. The embodiments and features, if any, described in this specification that do not fall under the scope of the independent claims are to be interpreted as examples useful for understanding various embodiments of the invention.

### BRIEF DESCRIPTION OF THE DRAWINGS

For a more complete understanding of example embodiments of the present invention, reference is now made to the following descriptions taken in connection with the accompanying drawings in which:
Fig. 1 shows an architectural drawing of a system of an example embodiment;
Fig. 2 shows a flowchart illustrating an overview of a method according to an example embodiment;
Fig. 3 shows an architectural drawing of a system of another example embodiment;
Fig. 4 shows an architectural drawing of a system of yet another example embodiment; and
Fig. 5 shows a block diagram of an apparatus 500 according to an embodiment of the invention.

### DETAILED DESCRIPTON OF THE DRAWINGS

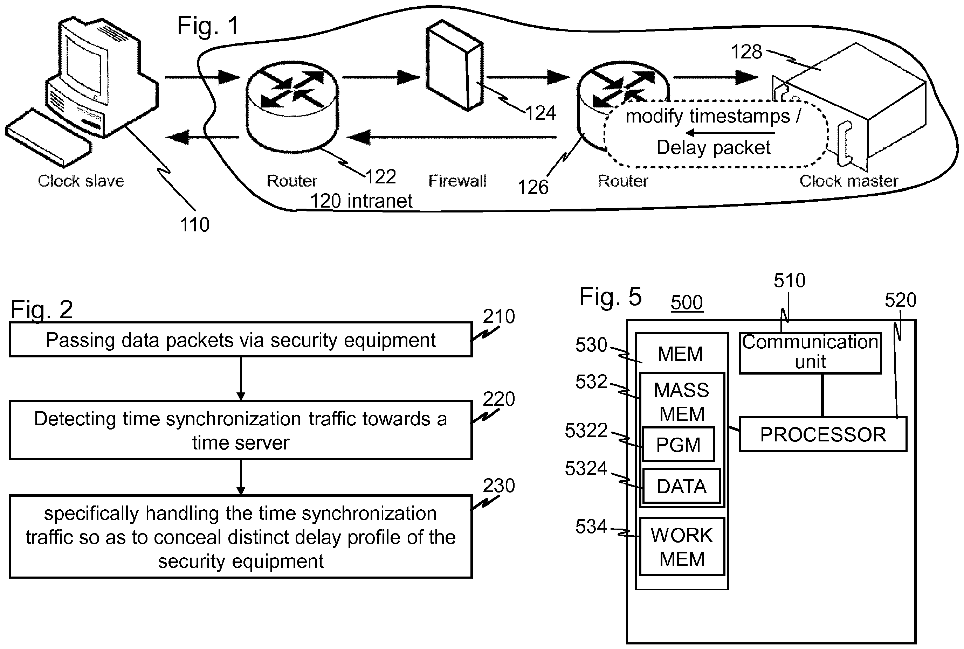

An example embodiment of the present invention and its potential advantages are understood by referring to Figs. 1 through 5 of the drawings. In this document, like reference signs denote like parts or steps.

Fig. 1 shows an architectural drawing of a system of an example embodiment. In Fig. 1, there is a clock slave 110 e.g. connected to the Internet, an intranet 120 comprising a first routing element 122 (e.g. router, switch), security equipment 124 such as a firewall, a second routing element 126 (e.g. router, switch) and a clock master 128. The intranet 120 represents one example embodiment, but it should be appreciated that other embodiments apply to different contexts, e.g. for inter-cloud operation or operating between a cloud and the Internet or an intranet or between two different intranets or between different parts of one intranet.

The clock slave 120 is e.g. any computer or botnet used for innocuous or malicious time synchronization communication.

In Fig. 1, a greatly simplified representation drawing is presented with only one routing element drawn before and one routing element drawn after the security equipment 124. In practice, there can be a number of parallel and sequential network elements comprised in either or both first and second routing elements. Further, the security equipment 124 may comprise a plurality of similar or different network elements such as firewalls, scanners or packet analyzers.

Service providers and other similar entities typically control a communications network which has external communications links and services located within the network. The controlled network and the services may be protected by some type of security devices such as firewalls. Some example embodiments of the present invention attempt to maintain these security devices transparent or hamper inspection of their precise functionality by a possible attacker so as to hinder targeted attacks against the security devices based on their particular vulnerabilities.

Let us next look at Fig. 2 for an overview of a method according to a first example aspect of the present invention. The method comprises:
passing 210 data packets via security equipment;
detecting 220 time synchronization traffic towards a time server; and
specifically handling 230 the time synchronization traffic so as to conceal distinct delay profile of the security equipment.

The time server may be a clock master.

When a normal time synchronization is performed using the typical network time protocol (NTP) as an example, the security equipment may cause an asymmetric delay in up/downlink. This asymmetric delay results in an incorrect offset where the difference to correct time is half the delay asymmetry. This offset may enable measuring and profiling devices inflicting asymmetric delay, such as the firewalls that are in use for processing incoming traffic.

In order to mitigate probing attack based on time synchronization based profiling, various options are next discussed in which the time synchronization protocol traffic is influenced to, including embodiments to: 1. modify protocol traffic, 2. divert protocol traffic, and 3. modify forwarding for protocol traffic.

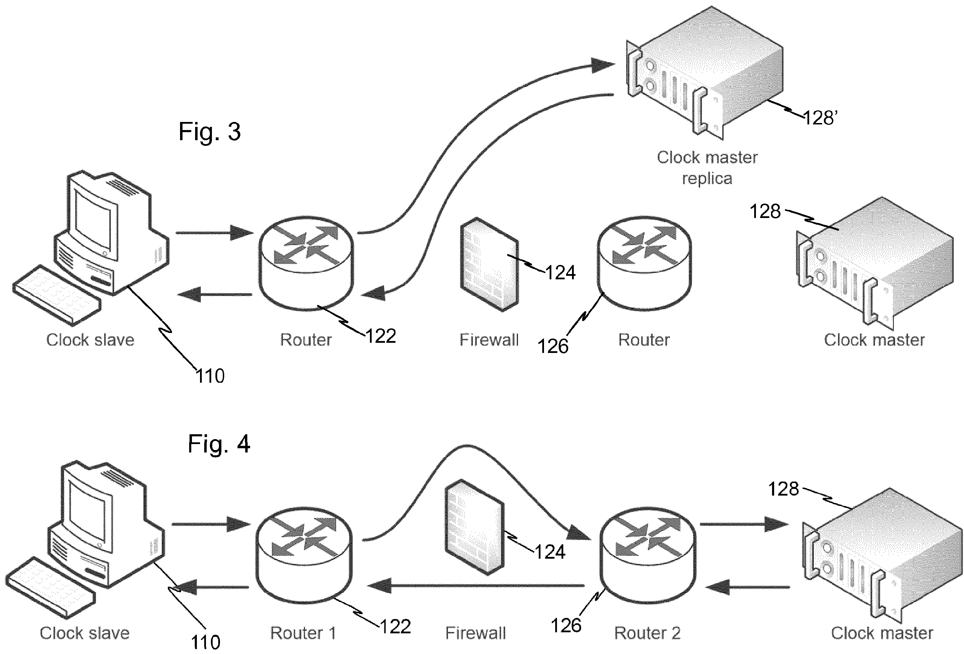

In an example embodiment of option 1, the protocol traffic is modified in transit, e.g. on network devices on communications path or by an originating device. In practice, this can be performed e.g. by modifying the data contained the fields indicating packet transmission time from the time server (clock master or clock master replica) in such a way that any delay asymmetry caused by the security equipment on path is hidden e.g. by causing compensating delay in uplink direction. Possible minor residual asymmetry could easily be lost in the noise floor of packet traversal. This option is illustrated in Figure 3.

It is possible to use a non-intrusive method to subtract a time period similar to the asymmetry introduced by the (e.g.) firewall from the sending time of packets (or their time stamp to be more accurate) travelling from master to slave (the non-delayed direction), thus artificially increasing the apparent transit time of the timing packet and making the path pseudo-symmetric from the slave's point of view.

For example, the transmission timestamps from the clock master 128 (e.g. Follow_Up preciseOriginTimestamp) to the clock slave 110 can be modified (subtract a time period similar to the asymmetry introduced by the security equipment 124 such as a firewall), assuming zero time overhead for the modification.

As another example, the transmission timestamps from clock master (Follow_Up preciseOriginTimestamp) to the clock slave 110 can be modified (subtract a time period similar to the asymmetry introduced by the security equipment 124 such as a firewall and add the time period it took to perform the modification)

The modifying packet content with very low and deterministic latency can be performed e.g. with application specific circuitry (ASIC) or sufficiently fast processor(s) and software and/or in the clock master 128 itself thus making the clock master 128 a participating defense component. In case the security equipment protects a clock server of the intranet, the clock master may be a participating defense component of the intranet.

In an example of Option 2, any incoming timing protocol traffic is diverted by the first routing element 122 (that in this case is a part of the security equipment) to a replica time server or clock master replica 128' (Fig. 3), which is on a different path with different or no delay-inducing security functionality (or subjected to lighter scrutiny or security inspection by the security equipment 124 that examines also other traffic). The master clock replica 128' provides in this example same level of time accuracy as the original clock master 128. This could also be considered an inversed form of time server multiplexing in the sense that multiple clock slaves 110 from potentially separate control domains could use a single actual master clock 128 while apparently contacting different masters.

In an example embodiment, the replica clock master 128' appears to the clock slave 110 as the original clock master 128, and the only difference may be that, enabled by the placement of the clock master replica 128', it is possible to route traffic between the clock slave 110 and clock master replica 128' in such a way that the security functionality (or some of the security functionality, whether hardware or software based processing) is not on the communications path between the slave clock 110 and the master clock replica 128'. Furthermore, in case of multiple clock slaves 110 and clock masters 128, a single clock master replica 128' act in an example embodiment as a replacement for multiple original clock masters. This is in a sense the inverse of known clock master replication.

In an example of Option 3 shown in Fig. 4, the forwarding path from network edge to the actual clock master 128 is modified in such a way that the time protocol traffic bypasses the security functionality we want to keep hidden, e.g. the security equipment 124. This bypass would only be applied to protocol messaging by the e.g. software-defined networking (SDN) infrastructure in order to avoid decreasing the overall security level of the system. In this case, the security equipment 124 comprises a router or generally routing equipment configured to bypass some other parts of the security equipment 124 so as to conceal them from fingerprinting.

As a concrete simple example of practical forwarding path modification and the necessary physical (or virtual) cabling connections can be made with following connections:
- clock slave 110 is connected to the first routing element 122
- the first routing element 122 is connected to the clock slave 110, the security equipment (e.g. firewall) 124 and the second routing element 126.
- the security equipment (e.g. firewall) 124 is connected to the first routing element 122 and the second routing element 126.
- the second routing element 126 is connected to the first routing element 122, the security equipment (e.g. firewall) 124 and the clock master 128.

Other traffic than clock slave 110 <-> clock master 128 in the example system is forwarded from the first routing element 122 to the security equipment (e.g. firewall) 124 to the second routing element 126 and vice versa. The clock synchronization traffic bypasses the security equipment (e.g. firewall) 124 by being routed through the direct cable between the first routing element 122 and the second routing element 126 instead. This routing control is implementable using normal switch forwarding tables e.g. by routing through the bypass connection if the traffic uses known clock master destination/source address and/or uses the clock synchronization protocol port numbers. This is implementable through e.g. SDN enabled network elements (routers) by a specific SDN application running on top of the SDN controller, since such match fields are a required feature in OpenFlow compliant switches as shown in Table 1.

**Table 1: Switch forwarding table example for OpenFlow switches**

| **FIELD** | | **Description** |
|---|---|---|
| OXM_OF_IN_PORT | *required* | Ingress port. This may be a physical or switch-defined logical port. |
| OXM_OF_ETH_DST | *required* | Ethernet source address. Can use arbitrary bit mask |
| OXM_OF_ETH_SRC | *required* | Ethernet destination address. Can use arbitrary bit mask |
| OXM_OF_ETH_TYPE | *required* | Ethernet type of the OpenFlow packet payload, after VLAN tags. |
| OXM_OF_IP_PROTO | *required* | IPv4 or IPv6 protocol number |
| OXM_OF_IPV4_SRC | *required* | IPv4 source address. Can use subnet mask or arbitrary bit mask |
| OXM_OF_IPV4_DST | *required* | IPv4 destination address. Can use subnet mask or arbitrary bit mask |
| OXM_OF_IPV6_SRC | *required* | IPv6 source address. Can use subnet mask or arbitrary bit mask |
| OXM_OF_IPV6_DST | *required* | IPv6 destination address. Can use subnet mask or arbitrary bit mask |
| OXM_OF_TCP_SRC | *required* | TCP source port |
| OXM_OF_TCP_DST | *required* | TCP destination port |
| OXM_OF_UDP_SRC | *required* | UDP source port |
| OXH_OF_UDP_DST | *required* | UDP destination port |

Fig. 5 shows a block diagram of an apparatus 500 according to an embodiment of the invention. The apparatus serves as an example implementation for use e.g. as a firewall, switch, router, clock master 128 or clock master replica 128'. The apparatus 500 comprises a memory 530 including a persistent memory or mass memory 532 and a work memory (e.g. random access memory 534). In some embodiments the mass memory and the work memory are at least partially same. The mass memory 532 is drawn to comprise a computer program 5322 that comprises computer executable program code, and data 5324 such as firewall or routing rules. The apparatus 500 further comprises a processor 520 for controlling the operation of the apparatus 500 using the computer program 5322 e.g. by running the computer program code or a portion thereof in the work memory 534, and a communication unit 510 for communicating with other nodes. The communication unit 510 comprises, for example, a local area network (LAN) port; a wireless local area network (WLAN) unit; Bluetooth unit; cellular data communication unit; or satellite data communication unit. The processor 520 comprises, for example, any one or more of: a master control unit (MCU); a microprocessor; a digital signal processor (DSP); an application specific integrated circuit (ASIC); a field programmable gate array; and a microcontroller. Also other protocol stacks with similar functionality e.g. Signalling System No 7 or SIGTRAN can be used.

Without in any way limiting the scope, interpretation, or application of the claims appearing below, a technical effect of one or more of the example embodiments disclosed herein is that fingerprinting of security devices by use of time synchronization protocol is hindered.

Embodiments of the present invention may be implemented in software, hardware, application logic or a combination of software, hardware and application logic. The software, application logic and/or hardware may reside on a router, firewall, switch or time server. If desired, part of the software, application logic and/or hardware may reside on any one of a router, firewall, switch or time server another part of the software, application logic and/or hardware may reside on any one or more remaining ones of the router, firewall, switch or time server. In an example embodiment, the application logic, software or an instruction set is maintained on any one of various conventional computer-readable media. In the context of this document, a "computer-readable medium" may be any non-transitory media or means that can contain, store, communicate, propagate or transport the instructions for use by or in connection with an instruction execution system, apparatus, or device, such as a computer, with one example of a computer described and depicted in Fig. 5. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the before-described functions may be optional or may be combined.

## Claims

1. A method comprising:
passing (210) Internet protocol data packets via security equipment (124); and
detecting (220) time synchronization traffic towards a time server (128); **characterized in** by:
specifically handling(230) the time synchronization traffic so as to conceal distinct delay profile of the security equipment (124);
wherein the specific handling of the time synchronization traffic comprises modifying a time difference between a time indicated by a time stamp of a time synchronization data packet received from the time server (128) and the time at which said time synchronization data packet is output by infrastructure equipment (122, 124, 126) that includes or excludes the security equipment.

2. The method of claim 1, wherein the modifying of the time difference comprises modifying the time stamp to compensate a first portion of the delay asymmetry caused by the security equipment in time synchronization traffic towards the time server (128) and back from the time server (128).

3. The method of claim 1, wherein the modifying of the time difference comprises delaying the output of said data packet.

4. The method of claim any one of preceding claims, wherein the specific handling of the time synchronization traffic comprises routing of the time synchronization traffic around at least some of the security equipment (124).

5. The method of claim 4, wherein the security equipment (124) comprises a router.

6. The method of claim any one of preceding claims, wherein the time synchronization traffic to be specifically handled is directed to the time server (128).

7. The method of claim 6, wherein the modifying of the time difference comprises forming the time stamp by the time server to compensate a first portion of the delay asymmetry of the security equipment (124).

8. The method of claim any one of claims 1 to 5, further comprising maintaining a time server replica and the modifying of the time difference comprises forming the time stamp by the time server (128) replica to compensate a first portion of the delay asymmetry of the security equipment (124).

9. The method of claim any one of claims 1 to 5, further comprising:
maintaining a time server replica; and
routing of the time synchronization traffic to the time server replica around at least some of the security equipment (124).

10. The method of claim 8 or 9, further comprising using the timer server replica to act as a replacement for multiple timer servers (128).

11. The method of any one of claims 1 to 10, wherein the security equipment (124) comprises a firewall.

12. An apparatus comprising:
security equipment (124) for passing data packets; and
a detector (520, 510, 5322) for detecting time synchronization traffic towards a time server (128); **characterized in that** the apparatus further comprises:
a handler (520, 510, 5322) for specifically handling the time synchronization traffic so as to conceal distinct delay profile of the security equipment (124);
wherein the specific handling of the time synchronization traffic comprises modifying a time difference between a time indicated by a time stamp of a time synchronization data packet received from the time server (128) and the time at which said time synchronization data packet is output by infrastructure equipment (122, 124, 126) that includes or excludes the security equipment.

13. The apparatus of claim 12, wherein the security equipment (124) comprises a firewall.

14. A computer program (5322), comprising:
code for passing (210) data packets via security equipment (124); and
code for detecting (220) time synchronization traffic towards a time server (128);
when the computer program (5322) is run on a processor (520);
**characterized in that** the computer program (5322) further comprises:
code for specifically handling (230) the time synchronization traffic so as to conceal distinct delay profile of the security equipment (124);
wherein the specific handling of the time synchronization traffic comprises modifying a time difference between a time indicated by a time stamp of a time synchronization data packet received from the time server (128) and the time at which said time synchronization data packet is output by infrastructure equipment (122, 124, 126) that includes or excludes the security equipment.

15. The computer program (5322) of claim 14, comprising code for performing the method of any one of claims 1 to 11, when run on the processor (520).

## Patentansprüche

1. Verfahren, das Folgendes umfasst:
Leiten (210) von Internetprotokolldatenpaketen via eine Sicherheitseinrichtung (124); und
Detektieren (220) von Zeitsynchronisationsverkehr zu einem Zeitserver (128); **gekennzeichnet durch**:
spezielles Handhaben (230) des Zeitsynchronisationsverkehrs, um ein eindeutiges Verzögerungsprofil der Sicherheitseinrichtung (124) zu verbergen;
wobei das spezielle Handhaben des Zeitsynchronisationsverkehrs das Ändern einer Zeitdifferenz zwischen einer Zeit, die von einem Zeitstempel eines Zeitsynchronisationsdatenpakets, das vom Zeitserver (128) empfangen wird, und der Zeit, zu der das Zeitsynchronisationsdatenpaket von einer Infrastruktureinrichtung (122, 124, 126), die die Sicherheitseinrichtung beinhaltet oder nicht beinhaltet, ausgegeben wird, umfasst.

2. Verfahren nach Anspruch 1, wobei das Ändern der Zeitdifferenz das Ändern des Zeitstempels umfasst, um einen ersten Abschnitt der Verzögerungsasymmetrie, die durch die Sicherheitseinrichtung beim Zeitsynchronisationsverkehr zum Zeitserver (128) und zurück vom Zeitserver (128) verursacht wird, auszugleichen.

3. Verfahren nach Anspruch 1, wobei das Ändern der Zeitdifferenz das Verzögern der Ausgabe des Datenpakets umfasst.

4. Verfahren nach einem der vorhergehenden Ansprüche, wobei das spezielle Handhaben des Zeitsynchronisationsverkehrs das Führen des Zeitsynchronisationsverkehrs mindestens um Teile der Sicherheitseinrichtung (124) herum umfasst.

5. Verfahren nach Anspruch 4, wobei die Sicherheitseinrichtung (124) einen Router umfasst.

6. Verfahren nach einem der vorhergehenden Ansprüche, wobei der Zeitsynchronisationsverkehr, der speziell zu handhaben ist, zum Zeitserver (128) übertragen wird.

7. Verfahren nach Anspruch 6, wobei das Ändern der Zeitdifferenz das Bilden des Zeitstempels durch den Zeitserver derart, dass ein erster Abschnitt der Verzögerungsasymmetrie der Sicherheitseinrichtung (124) ausgeglichen wird, umfasst.

8. Verfahren nach einem der Ansprüche 1 bis 5, das ferner das Unterhalten einer Zeitserverkopie umfasst und das Ändern der Zeitdifferenz das Bilden des Zeitstempels durch die Zeitserver(128)-Kopie derart, dass ein erster Abschnitt der Verzögerungsasymmetrie der Sicherheitseinrichtung (124) ausgeglichen wird, umfasst.

9. Verfahren nach einem der Ansprüche 1 bis 5, das ferner Folgendes umfasst:
Unterhalten einer Zeitserverkopie; und
Führen des Zeitsynchronisationsverkehrs mindestens um Teile der Sicherheitseinrichtung (124) herum zur Zeitserverkopie.

10. Verfahren nach Anspruch 8 oder 9, das ferner das Verwenden der Zeitserverkopie zum Fungieren als ein Ersatz für mehrere Zeitserver (128) umfasst.

11. Verfahren nach einem der Ansprüche 1 bis 10, wobei die Sicherheitseinrichtung (124) eine Firewall umfasst.

12. Vorrichtung, die Folgendes umfasst:
eine Sicherheitseinrichtung (124) zum Leiten von Datenpaketen; und
einen Detektor (520, 510, 5322) zum Detektieren von Zeitsynchronisationsverkehr zu einem Zeitserver (128); **dadurch gekennzeichnet, dass** die Vorrichtung ferner Folgendes umfasst:
einen Handhaber (520, 510, 5322) zum speziellen Handhaben des Zeitsynchronisationsverkehrs, um ein eindeutiges Verzögerungsprofil der Sicherheitseinrichtung (124) zu verbergen;
wobei das spezielle Handhaben des Zeitsynchronisationsverkehrs das Ändern einer Zeitdifferenz zwischen einer Zeit, die von einem Zeitstempel eines Zeitsynchronisationsdatenpakets, das vom Zeitserver (128) empfangen wird, und der Zeit, zu der das Zeitsynchronisationsdatenpaket von einer Infrastruktureinrichtung (122, 124, 126), die die Sicherheitseinrichtung beinhaltet oder nicht beinhaltet, ausgegeben wird, umfasst.

13. Vorrichtung nach Anspruch 12, wobei die Sicherheitseinrichtung (124) eine Firewall umfasst.

14. Computerprogramm (5322), das Folgendes umfasst:
Code zum Leiten (210) von Datenpaketen via eine Sicherheitseinrichtung (124); und
Code zum Detektieren (220) von Zeitsynchronisationsverkehr zu einem Zeitserver (128);
wenn das Computerprogramm (5322) auf einem Prozessor (520) ausgeführt wird;
**dadurch gekennzeichnet, dass** das Computerprogramm (5322) ferner Folgendes umfasst:
Code zum speziellen Handhaben (230) des Zeitsynchronisationsverkehrs, um ein eindeutiges Verzögerungsprofil der Sicherheitseinrichtung (124) zu verbergen;
wobei das spezielle Handhaben des Zeitsynchronisationsverkehrs das Ändern einer Zeitdifferenz zwischen einer Zeit, die von einem Zeitstempel eines Zeitsynchronisationsdatenpakets, das vom Zeitserver (128) empfangen wird, und der Zeit, zu der das Zeitsynchronisationsdatenpaket von einer Infrastruktureinrichtung (122, 124, 126), die die Sicherheitseinrichtung beinhaltet oder nicht beinhaltet, ausgegeben wird, umfasst.

15. Computerprogramm (5322) nach Anspruch 14, das Code zum Durchführen des Verfahrens nach einem der Ansprüche 1 bis 11, wenn er auf dem Prozessor (520) ausgeführt wird, umfasst.

## Revendications

1. Procédé comprenant :
le transfert (210) de paquets de données de protocole Internet via un équipement de sécurité (124) ; et
la détection (220) d'un trafic de synchronisation horaire vers un serveur de temps (128) ; **caractérisé par** :
la gestion spécifique (230) du trafic de synchronisation horaire de façon à dissimuler un profil de retard distinct de l'équipement de sécurité (124) ;
dans lequel la gestion spécifique du trafic de synchronisation horaire comprend la modification d'une différence horaire entre un horaire indiqué par un horodatage d'un paquet de données de synchronisation horaire reçu à partir du serveur de temps (128) et l'horaire auquel ledit paquet de données de synchronisation horaire est délivré en sortie par un équipement d'infrastructure (122, 124, 126) qui inclut ou exclut l'équipement de sécurité.

2. Procédé selon la revendication 1, dans lequel la modification de la différence horaire comprend la modification de l'horodatage pour compenser une première partie de l'asymétrie de retard provoquée par l'équipement de sécurité dans un trafic de synchronisation horaire vers le serveur de temps (128) et revenant du serveur de temps (128).

3. Procédé selon la revendication 1, dans lequel la modification de la différence horaire comprend le retardement de la sortie dudit paquet de données.

4. Procédé selon l'une quelconque des revendications précédentes, dans lequel la gestion spécifique du trafic de synchronisation horaire comprend le routage du trafic de synchronisation horaire autour d'au moins une partie de l'équipement de sécurité (124).

5. Procédé selon la revendication 4, dans lequel l'équipement de sécurité (124) comprend un routeur.

6. Procédé selon l'une quelconque des revendications précédentes, dans lequel le trafic de synchronisation horaire devant être spécifiquement géré est dirigé vers le serveur de temps (128).

7. Procédé selon la revendication 6, dans lequel la modification de la différence horaire comprend la formation de l'horodatage par le serveur de temps pour compenser une première partie de l'asymétrie de retard de l'équipement de sécurité (124).

8. Procédé selon l'une quelconque des revendications 1 à 5, comprenant en outre le maintien d'une réplique de serveur de temps et la modification de la différence horaire comprend la formation de l'horodatage par la réplique de serveur de temps (128) pour compenser une première partie de l'asymétrie de retard de l'équipement de sécurité (124).

9. Procédé selon l'une quelconque des revendications 1 à 5, comprenant en outre :
le maintien d'une réplique de serveur de temps ; et
le routage du trafic de synchronisation horaire vers la réplique de serveur de temps autour d'au moins une partie de l'équipement de sécurité (124).

10. Procédé selon la revendication 8 ou 9, comprenant en outre l'utilisation de la réplique de serveur de temps pour jouer le rôle d'un remplaçant pour de multiples serveurs de temps (128).

11. Procédé selon l'une quelconque des revendications 1 à 10, dans lequel l'équipement de sécurité (124) comprend un pare-feu.

12. Appareil comprenant :
un équipement de sécurité (124) pour transférer des paquets de données ; et
un détecteur (520, 510, 5322) pour détecter un trafic de synchronisation horaire vers un serveur de temps (128) ; **caractérisé en ce que** l'appareil comprend en outre :
un gestionnaire (520, 510, 5322) pour gérer spécifiquement le trafic de synchronisation horaire de façon à dissimuler un profil de retard distinct de l'équipement de sécurité (124) ;
dans lequel la gestion spécifique du trafic de synchronisation horaire comprend la modification d'une différence horaire entre un horaire indiqué par un horodatage d'un paquet de données de synchronisation horaire reçu à partir du serveur de temps (128) et l'horaire auquel ledit paquet de données de synchronisation horaire est délivré en sortie par un équipement d'infrastructure (122, 124, 126) qui inclut ou exclut l'équipement de sécurité.

13. Appareil selon la revendication 12, dans lequel l'équipement de sécurité (124) comprend un pare-feu.

14. Programme informatique (5322), comprenant :
un code pour transférer (210) des paquets de données via un équipement de sécurité (124) ; et
un code pour détecter (220) un trafic de synchronisation horaire vers un serveur de temps (128) ;
lorsque le programme informatique (5322) est exécuté sur un processeur (520) ;
**caractérisé en ce que** le programme informatique (5322) comprend en outre :
un code pour gérer spécifiquement (230) le trafic de synchronisation horaire de façon à dissimuler un profil de retard distinct de l'équipement de sécurité (124) ;
dans lequel la gestion spécifique du trafic de synchronisation horaire comprend la modification d'une différence horaire entre un horaire indiqué par un horodatage d'un paquet de données de synchronisation horaire reçu à partir du serveur de temps (128) et l'horaire auquel ledit paquet de données de synchronisation horaire est délivré en sortie par un équipement d'infrastructure (122, 124, 126) qui inclut ou exclut l'équipement de sécurité.

15. Programme informatique (5322) selon la revendication 14, comprenant un code pour réaliser le procédé selon l'une quelconque des revendications 1 à 11, lorsqu'il est exécuté sur le processeur (520).
